(19) Europäisches Patentamt

**European Patent Office**

**Office européen des brevets**

(11) Veröffentlichungsnummer: **0 296 386 B1**

(12) **EUROPÄISCHE PATENTSCHRIFT**

(45) Veröffentlichungstag der Patentschrift: **30.12.92**

(21) Anmeldenummer: **88108754.8**

(22) Anmeldetag: **01.06.88**

(51) Int. Cl.⁵: **B65G 19/02**, B65G 47/84

(54) **Transporteinrichtung für gerundete Dosenzargen.**

(30) Priorität: **24.06.87 DE 3720804**

(43) Veröffentlichungstag der Anmeldung:
**28.12.88 Patentblatt 88/52**

(45) Bekanntmachung des Hinweises auf die
Patenterteilung:
**30.12.92 Patentblatt 92/53**

(84) Benannte Vertragsstaaten:
**AT BE CH FR GB IT LI NL SE**

(56) Entgegenhaltungen:
**DE-A- 2 428 618**
**DE-A- 2 710 180**
**DE-A- 2 748 910**
**DE-A- 3 048 231**
**DE-C- 2 820 188**

(73) Patentinhaber: **Fried. Krupp AG**
**Altendorfer Strasse 103**
**W-4300 Essen 1(DE)**

(72) Erfinder: **Lentz, Norbert, Dr.-Ing.**
**Ostpreussenstrasse 82**
**W-4300 Essen 15(DE)**
Erfinder: **Schmidt, Harald, Dipl.-Ing.**
**Lerchenstrasse 22**
**W-4300 Essen 1(DE)**

## Beschreibung

Die Erfindung betrifft eine Einrichtung zum Transport gerundeter Dosenzargen nach dem Oberbegriff des Anspruchs 1.

Eine derartige Einrichtung ist aus der DE-PS 27 48 910 bekannt. Dabei ist die konstante Transportgeschwindigkeit der ersten Vorschubeinrichtung im allgemeinen deutlich höher als die Verarbeitungsgeschwindigkeit (z.B. die Schweißgeschwindigkeit). Wenn die Mitnehmer der ersten Vorschubanordnung gegen die in ihrer Ruhelage befindliche Dosenzarge stoßen, erfährt diese theoretisch eine unendlich hohe Beschleunigung, wodurch die Gefahr besteht, daß die Kante der Dosenzarge deformiert wird. Um dies zu verhindern, ist es bekannt, die Mitnehmer als weit auskragende Finger an einer Kette anzulenken. Durch diese Anordnung erreicht man zwar eine gewisse Nachgiebigkeit, so daß der Stoß beim Auftreffen des Mitnehmers auf die Dosenzarge gedämpft wird. In der Praxis werden die Dosenzargen trotz der Nachgiebigkeit der Mitnehmer nahezu stoßartig über eine sehr kurze Wegstrecke in der Größenordnung von einem oder wenigen Millimetern von Null auf die volle Transportgeschwindigkeit beschleunigt, wodurch sehr große Reaktionskräfte an der Kante der Dosenzarge hervorgerufen werden. Die Beschleunigung und die Reaktionskräfte erhöhen sich mit der Ausbringung der Einrichtung (Anzahl der Dosenzargen/min) bzw. mit der Transportgeschwindigkeit, so daß bei einer Steigerung der Ausbringung die Gefahr besteht, daß die Kanten der Dosenzargen trotz der nachgiebigen Finger beschädigt werden.

Damit die Übergabe der Dosenzargen von der mit höherer Umfangsgeschwindigkeit betriebenen ersten Vorschubanordnung auf die mit geringerer Umfangsgeschwindigkeit betriebene zweite Vorschubanordnung ohne nachteilige Stöße erfolgt, weist die zweite Vorschubanordnung bei der aus der DE-PS 27 48 910 bekannten Einrichtung schwenkbare Klinken auf, die an einer speziellen Kontur einer Führungsschiene gesteuert werden.

Aus der DE-PS 28 20 188 ist noch eine Transporteinrichtung mit zwei hintereinander angeordneten, jeweils mit Mitnehmern versehenen endlosen Ketten bekannt, bei der die Ketten mit Hilfe eines Schrittschaltgetriebes aus dem Stillstand etwa in Form einer Sinusfunktion bis auf Geschwindigkeiten von 200 m/min beschleunigt und wieder bis zum Stillstand abgebremst werden. Die gerundete Dosenzarge erfährt zwar durch diese Einrichtung eine ruckfreie Bewegung mit günstigen Beschleunigungswerten, so daß an der Kante der Dosenzarge keine Beschädigungen zu befürchten sind, jedoch kann die Ausbringung der bekannten Transporteinrichtung aufgrund der Beschleunigung der Massen der Transportkette, der Mitnehmer, der Kettenräder und der Getriebeteile über den derzeitigen Stand hinaus nicht mehr wesentlich gesteigert werden.

Weiterhin ist aus der DE-OS 32 05 177 eine Antriebsvorrichtung für Montagepaletten in Transferstraßen bekannt, bei der eine vorläufige Endposition einer Palette durch den Mitnehmer einer ersten umlaufenden Kette im hinteren Umlenkpunkt und das Weiterbewegen der Palette nach einem Halt durch den Mitnehmer einer zweiten Kette im vorderen Umlenkpunkt bestimmt wird.

Aus der DE-AS 23 23 225 ist ein Kettenvorschubgetriebe bekannt, mit dem Zuschnittstapel gegen einen Anschlag durch senkrechte Transportlaschen einer umlaufenden Kettenantriebsanordnung im hinteren Umlenkpunkt positioniert werden.

Schließlich ist noch aus der DE-PS 899 765 eine Transportvorrichtung für Gefäßbehandlungsmaschinen bekannt, bei der Gefäße zwischen zwei Platten- oder Bandförderern durch an einem umlaufenden Scheibenrad angeordnete Transportfinger mit sinusförmiger Geschwindigkeit bewegt werden.

Der Erfindung liegt die Aufgabe zugrunde, eine Einrichtung der eingangs genannten Art so zu gestalten, daß die Dosenzargen bei höheren Ausbringungen beschädigungsfrei aus ihrer Ruhelage heraus bewegt werden können.

Diese Aufgabe wird erfindungsgemäß durch die im kennzeichnenden Teil des Anspruchs 1 beschriebenen Merkmale gelöst. Die Verwendung von zwei Zugmitteln erlaubt ein symmetrisches und damit sicheres Erfassen der Dosenzarge durch die Mitnehmer. Durch die durchgehende Ausbildung der Mitnehmer wird eine größere Stabilität der Vorschubanordnung erreicht. Die Bewegungskomponente der Mitnehmer in der waagerechten Transportrichtung soll beim Auftreffen auf die hintere Kante der jeweiligen Dosenzarge nicht mehr als das 0,71-fache der Umlaufgeschwindigkeit bzw. der Transportgeschwindigkeit betragen, was einer Winkellage der Mitnehmer gegenüber der parallel zur Transportrichtung gedachten Ebene durch die Drehachse des ersten Umlenkrades von etwa 45° entspricht. Dabei ist die waagerechte Bewegungskomponente (in Transportrichtung) um so kleiner, je weniger sich die Mitnehmer von der parallel zur Transportrichtung durch die Drehachse des Umlaufrads gedachten Ebene entfernt haben. Sind die Mitnehmer genau in dieser Ebene, dann ist die waagerechte Bewegungskomponente sogar Null. Der von den Mitnehmern auf die in Ruhelage befindliche Dosenzarge ausgeübte Stoß ist infolge der bei allen Gegenständen mehr oder minder vorhandenen Elastizität erfahrungsgemäß um so geringer, je kleiner die Geschwindigkeitskomponente in Transportrichtung beim Auftreffen ist. Am günstig-

2

sten ist es, wenn die Dosenzargen von dem jeweiligen Mitnehmer erfaßt werden, wenn er sich in der parallel zur Transportrichtung durch die Drehachse gedachte Ebene befindet, da die Geschwindigkeitskomponente in Transportrichtung in diesem Punkt Null ist und die Dosenzargen - auch unter Vernachlässigung jeglicher Elastizität - nur eine endliche Beschleunigung erfahren. Das Erfassen der Dosenzargen in diesem Punkt wird durch die durchgehende Ausbildung der Mitnehmer ermöglicht. Jedoch sollte die Drehachse des Umlenkrades derart angeordnet sein, daß zwischen dem in der parallel zur Transportrichtung durch die Drehachse des Umlenkrades gedachten Ebene befindlichen Mitnehmer und der Hinterkante der in ihrer Ruhelage befindlichen Dosenzarge ein Sicherheitsabstand von etwa 1 mm nicht unterschritten wird.

Zur Erhöhung der Sicherheit gegen Beschädigungen der Dosenzargen soll die Bewegungskomponente des Mitnehmers in Transportrichtung beim Auftreffen auf die Dosenzarge nach Anspruch 2 nicht größer als das 0,26-fache der Umfangs- bzw. der Transportgeschwindigkeit des Zugmittels betragen, was einer Winkellage der Mitnehmer gegenüber der parallel zur Transportrichtung gedachten Ebene durch die Drehachse des Umlenkrades von etwa 15° entspricht.

Die Ansprüche 3 und 4 beschreiben bevorzugte Ausbildungen der Zugmittel der Vorschubanordnungen.

Wenn die Mitnehmer - aus der waagerechten Transporteinrichtung kommend - um das zweite Umlenkrad der ersten Vorschubanordnung laufen, verringert sich deren Bewegungskomponente in Transportrichtung. Bei einer bestimmten Winkellage ist diese Bewegungskomponente gleich der Transportgeschwindigkeit der zweiten Vorschubanordnung. Damit die Dosenzarge stoßfrei von der ersten an die zweite Vorschubanordnung übergeben wird, muß der Mitnehmer der ersten Vorschubanordnung in der beschriebenen Lage genau unter einem Mitnehmer der zweiten Vorschubanordnung sein. Außerdem sollte die Drehachse des ersten Umlenkrades der zweiten Vorschubanordnung fluchtend zu diesem Übergabepunkt liegen. Um dies zu erreichen, ist nach Anspruch 5 vorgesehen, beide Vorschubanordnungen gegenseitig verschiebbar zueinander zu gestalten.

Ein Ausführungsbeispiel des Gegenstandes der Erfindung ist in der Zeichnung dargestellt und wird im folgenden näher erläutert. Es zeigen:

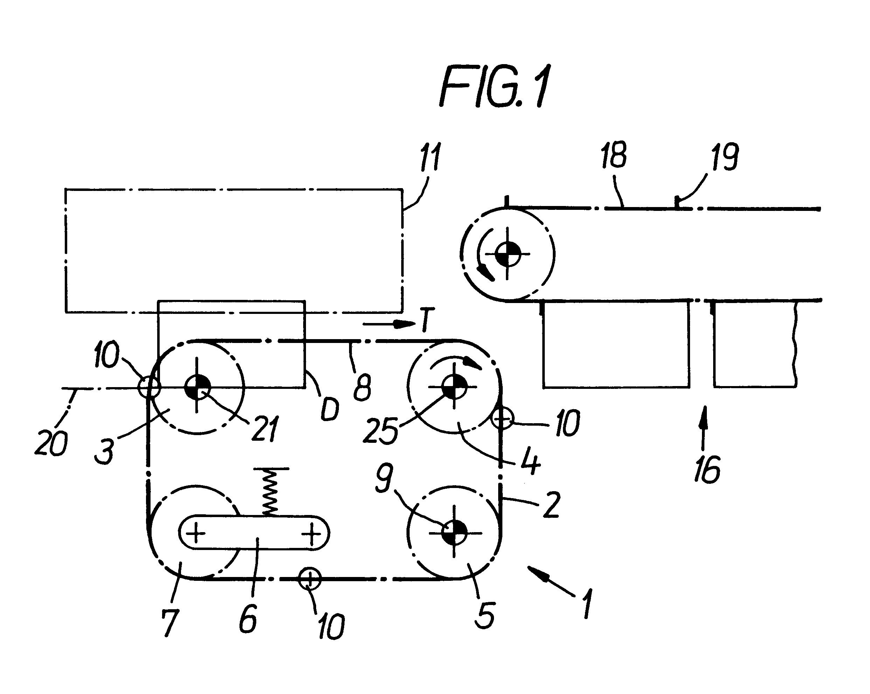

Fig. 1 die Vorschubanordnungen im Verhältnis zu einem Rundapparat in einer auszugsweisen schematischen Darstellung,

Fig. 2 die erste Vorschubanordnung beim Erfassen einer Dosenzarge in einer auszugsweisen vergrößerten Darstellung,

Fig. 3 die Vorschubanordnungen im Moment der Übergabe einer Dosenzarge in einer auszugsweisen vergrößerten Darstellung,

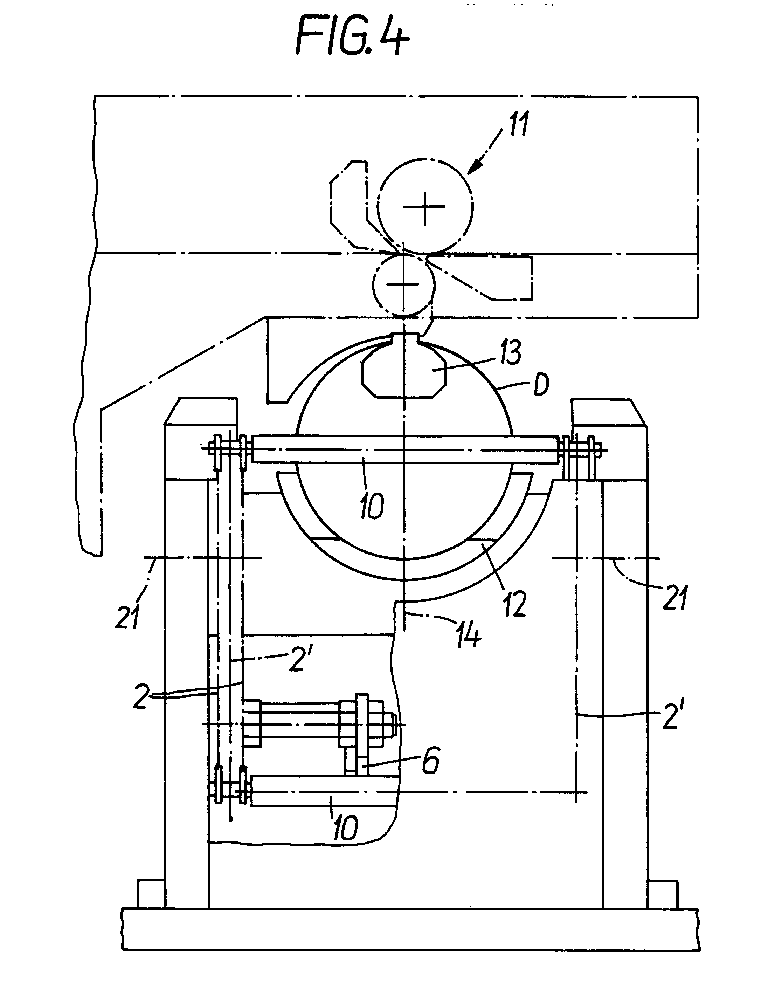

Fig. 4 die Einrichtung in einer Stirnansicht mit dem Blick in Transportrichtung und

Fig. 5 die Bewegungskomponente einer Dosenzarge in Transportrichtung in Abhängigkeit von der Zeit.

Die Einrichtung zum Transport gerundeter Dosenzargen D weist eine erste Vorschubanordnung 1 mit zwei in sich gleichen, endlosen Ketten 2 auf, die jeweils um zwei obere Umlenkräder 3, 4, ein Antriebsrad 5 und ein an einem federbelasteten Schwingarm 6 gelagertes Spannrad 7 umlaufen. Die Ketten 2 weisen jeweils ein oberes Trum 8 auf, das zwischen dem - in Transportrichtung T der Dosenzargen D gesehen - ersten und zweiten Umlenkrad 3, 4 parallel zur Transportrichtung T der Dosenzargen D verläuft. Vom zweiten Umlenkrad 4 zum Antriebsrad 5 verlaufen die Ketten 2 senkrecht nach unten und vom Spannrad 7 werden die Ketten 2 senkrecht an das erste Umlenkrad 3 herangeführt. Zum Synchronlauf der beiden Ketten 2 weisen die Antriebsräder 5 eine gemeinsame Antriebswelle 9 auf.

Die erste Vorschubanordnung 1 weist in gleichmäßigen Abständen angeordnete, zylindrisch ausgebildete Mitnehmerbalken 10 auf, die sich zwischen den beiden Ketten 2 durchgehend erstrecken.

Die Mitnehmerbalken 10 umlaufen eine unter einem Rundapparat 11 angeordnete Fangschale 12, in der die Dosenzargen D nach dem Verlassen des Rundapparats 11 kurzfristig zur Ruhe kommen. Eine über der Fangschale 12 befindliche Führungsschiene 13 dient der Führung der Dosenzargen in Transportrichtung T. Über einen Teil des Weges kann die Fangschale 12 zur Führung der Dosenzargen mit herangezogen werden.

Die durch die beiden Ketten 2 gedachten Ebenen 2' sind untereinander parallel und symmetrisch zu der gemeinsamen senkrechten Mittelebene 14 durch die Führungsschiene 13 und die Fangschale 12.

Die zweite Vorschubanordnung 16, die die Dosenzargen D beispielsweise in eine (nicht dargestellte) Schweißstation fördert, weist zwei rechts und links der Führungsschiene 13 umlaufende Ketten 18 mit nach außen vorspringenden Mitnehmerfingern 19 auf. Zur Synchronisation sind die Antriebe der beiden Vorschubanordnungen 1, 16 mechanisch miteinander gekoppelt. Während die Transport- bzw. Umfangsgeschwindigkeit $v_0'$ der zweiten Vorschubanordnung 16 im wesentlichen der Schweißgeschwindigkeit entspricht, weist die erste Vorschubanordnung 1 gegenüber der zweiten Vorschubanordnung 16 eine z.B. um das zweifach höhere Transportgeschwindigkeit $v_0$ auf.

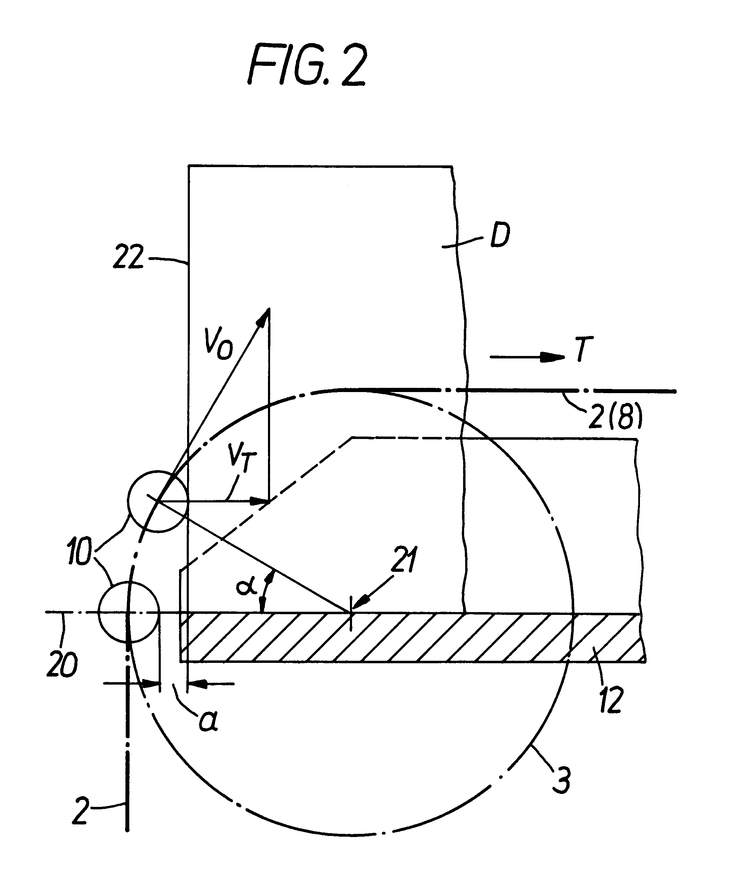

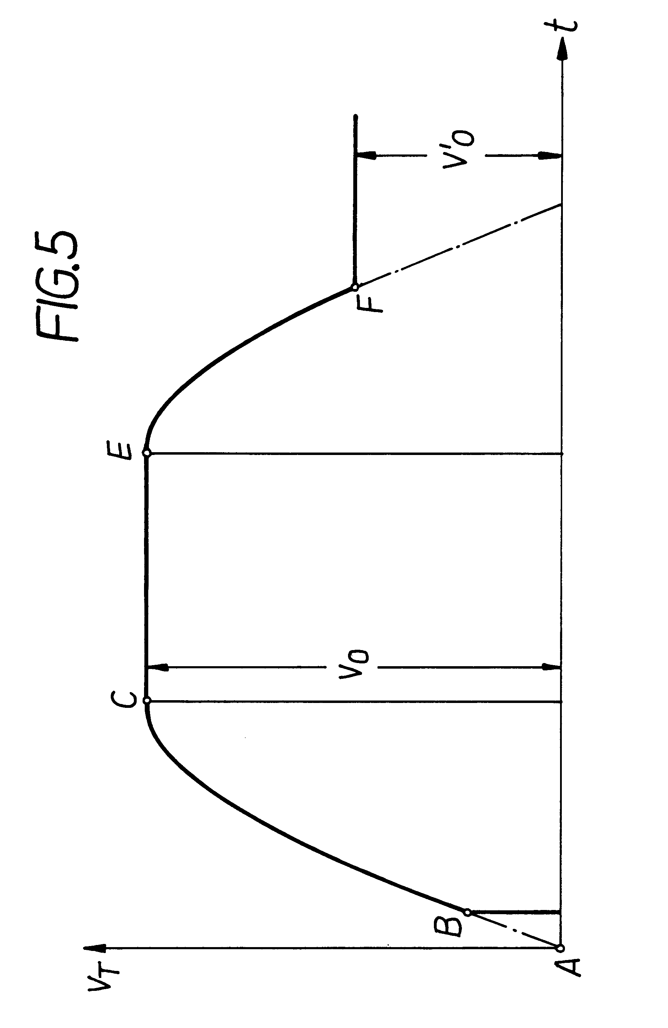

Nach dem Runden im Rundapparat 11 liegen die Dosenzargen D für ein kurzes Zeitintervall in der Fangschale 12. Der Rundapparat 11 und die erste Vorschubanordnung 1 sind - in Transportrichtung T gesehen - in eine solche Position zueinander gebracht, daß der Mitnehmerbalken 10, wenn er sich in der parallel zur Transportrichtung T gedachten Ebene 20 durch die Drehachse 21 des ersten Umlenkrades 3 befindet, einen Abstand a von der hinteren Kante 22 der Dosenzarge D von etwa 1 mm aufweist (vgl. Fig. 2 und Punkt A in Fig. 5). Der Beginn des Vorschubs der Dosenzarge (Punkt B in Fig. 5) erfolgt nach einer Drehung des Mitnehmerbalkens 10 um einen Winkel $\alpha$. Die Bewegungskomponente $v_T$ des Mitnehmerbalkens 10 in Transportrichtung T ist bei kleinem Winkel $\alpha$ deutlich kleiner als die Transport- bzw. Umlaufgeschwindigkeit $v_0$ selbst, so daß die Dosenzarge D verhältnismäßig weich erfaßt wird. Die Geschwindigkeitskomponente $v_T$ des Mitnehmerbalkens 10 in Transportrichtung T und damit die Transportgeschwindigkeit der Dosenzarge D wird mit dem weiteren Drehen des Mitnehmerbalkens 10 um die Achse 21 bis zur vollen Transportgeschwindigkeit $v_0$ (Punkt C in Fig. 5) beschleunigt.

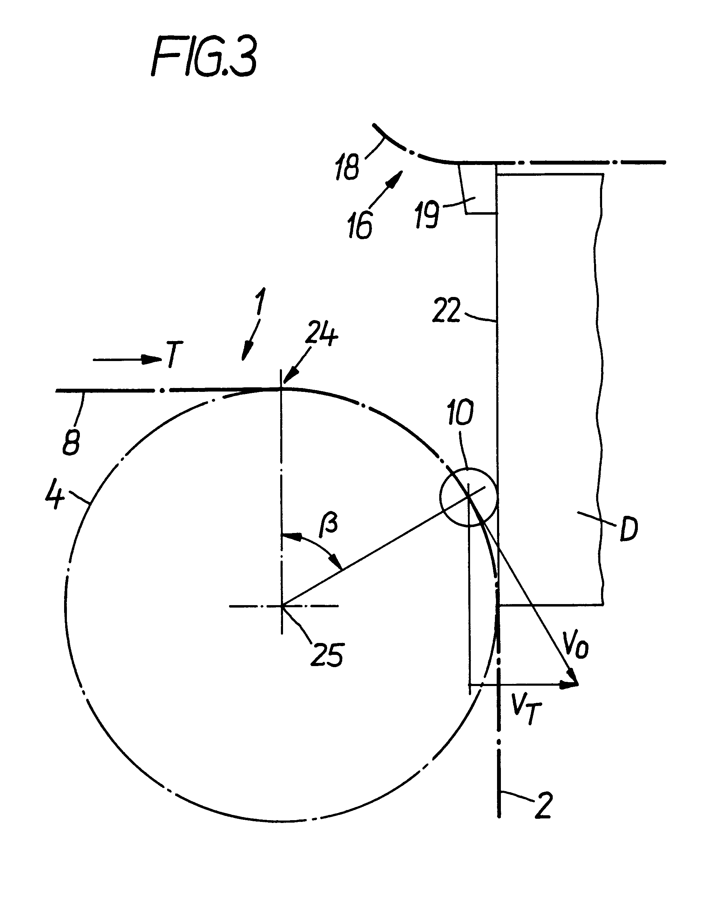

Bei der Übergabe der Dosenzarge D an die zweite Vorschubanordnung 16 (vgl. Fig. 3 und Punkt F in Fig. 5) hat sich der Mitnehmerbalken 10 - gerechnet ab dem Tangentenpunkt 24 des Obertrum 8 an das zweiten Umlenkrad 4 (vgl. Fig. 3 und Punkt E in Fig. 5) - um einen Winkel $\beta$ von 60° um die Achse 25 des Umlenkrades 4 gedreht. Zu diesem Zeitpunkt beträgt die Geschwindigkeitskomponente $v_T$ des Mitnehmerbalkens 10 in Transportrichtung T der halben Transportgeschwindigkeit $v_0$ der ersten Vorschubanordnung 1 und damit der vollen Transportgeschwindigkeit $v_0'$ der zweiten Vorschubanordnung 16. Bei einem anderen Verhältnis der Transportgeschwindigkeiten $v_0'/v_0$ ergibt sich für die Übergabe der Dosenzarge D ein entsprechend anderer Drehwinkel $\beta$ des Mitnehmerbalkens 10 um die Achse 25. Im gleichen Zeitpunkt wird die hintere Kante 22 der Dosenzarge D durch einen Mitnehmerfinger 19 der zweiten Vorschubanordnung 16 erfaßt und in Richtung auf die (nicht dargestellte) Schweißstation gefördert.

Zum Zeitpunkt der Übergabe der Dosenzarge D an die zweite Vorschubanordnung 16 müssen die Mitnehmer 10 bzw. 19 beider Vorschubanordnungen 1, 16 übereinander stehen bzw. gleichzeitig an der hinteren Kante 22 der Dosenzarge D anliegen. Dies kann auf zweierlei Art und Weise erreicht werden. Zum einen können die Vorschubanordnungen 1 und 16 - in Transportrichtung T gesehen - in ihrer Lage zueinander verstellt werden. Zum anderen können die Kettenpaare 2 bzw. 18 einer der Vorschubeinrichtungen 1 bzw. 16 durch Betätigen einer (nicht dargestellten) Kupplung um einen bestimmten Winkel um das betreffende Antriebsrad (z.B. Antriebsrad 5) leer gedreht werden.

**Patentansprüche**

1. Einrichtung zum Transport gerundeter Dosenzargen (D) von einer Station (11), in der die Dosenzargen in bezug auf ihre Längsachse zeitweise eine Ruhelage einnehmen, in eine Bearbeitungsstation, bestehend aus zwei synchron angetriebenen, hintereinander angeordneten Vorschubanordnungen (1, 16) mit jeweils mindestens einem mit Mitnehmern (10, 19) versehenen, endlos umlaufenden Zugmittel (2, 18) mit einem den Dosenzargen zugewandten und parallel zu deren Transporteinrichtung (T) um ein vorderes und um ein hinteres Umlenkrad (3, 4) verlaufenden Trum,
   wobei die erste Vorschubanordnung (1) mit einer gleichförmigen Umlaufgeschwindigkeit ($v_0$) betreibbar ist
   und die Mitnehmer (10) der ersten Vorschubanordnung (1) senkrecht zu der Umlaufebene ($2'$) des Zugmittels (2) angeordnet sind,
   **dadurch gekennzeichnet,**
   daß die erste Vorschubanordnung (1) zwei untereinander gleiche, in parallelen Ebenen angeordnete Zugmittel (2) aufweist, daß die Mitnehmer (10) zwischen den beiden Zugmitteln (2) durchgehend ausgebildet sind, und daß die Drehachse (21) des jeweils ersten Umlenkrades (3) - in Transportrichtung (T) gesehen - derart hinter der hinteren Kante (22) der jeweils in ihrer Ruhelage befindlichen Dosenzarge (D) angeordnet ist, daß der jeweilige Mitnehmer (10) der ersten Vorschubanordnung (1) beim Auftreffen auf die hintere Kante (22) der in Ruhelage befindlichen Dosenzarge (D) eine Bewegungskomponente ($v_T$) in Transportrichtung (T) hat, die höchstens gleich dem 0,71-fachen der Umfangsgeschwindigkeit ($v_0$) des Zugmittels (2) ist.

2. Einrichtung nach Anspruch 1, dadurch gekennzeichnet, daß die Mitnehmer (10) der ersten Vorschubanordnung (1) beim Auftreffen auf die hintere Kante (22) der in Ruhelage befindlichen Dosenzarge (D) eine Bewegungskomponente ($v_T$) in Transportrichtung (T) haben, die höchstens gleich dem 0,26-fachen der Umfangsgeschwindigkeit ($v_0$) ist.

3. Einrichtung nach einem der Ansprüche 1 oder 2, dadurch gekennzeichnet, daß die Vorschubanordnungen (1, 16) als Kettenanordnung ausgebildet sind.

4. Einrichtung nach einem der Ansprüche 1 bis 3, dadurch gekennzeichnet, daß die Vorschubanordnungen (1, 16) als Zahnriemenanordnung ausgebildet sind.

5. Einrichtung nach einem der vorangegangenen Ansprüche, dadurch gekennzeichnet, daß die Lage der ersten Vorschubanordnung (1) gegenüber der zweiten Vorschubanordnung (16) in Transportrichtung (T) einstellbar ist.

**Claims**

1. A system for conveying rounded can bodies (D) from a station (11) at which the can bodies occupy for a time a position at rest in relation to their longitudinal axis to a processing station, comprising two synchronously driven feed arrangements (1, 16) each having at least one endlessly rotating pulling means (2, 18) having entraining means (10, 19) and a run adjacent the can bodies and extending parallel with their conveying direction (7) around a front and a rear pulley (3, 4), the first feed arrangement (1) being drivable at a uniform peripheral speed (v0)
and the entraining means (10) of the first feed arrangement (1) being disposed perpendicularly to the plane of rotation (2') of the pulling means (2),
characterized in that the first feed arrangement (1) has two identical pulling means (2) disposed in parallel planes, the entraining means (10) are constructed continuous between the two pulling means (2), and the pivoting axis (21) of each first pulley (3), viewed in the conveying direction (7), is so disposed behind the rear edge (22) of each can body (D) situated in its position at rest that on impingement on the rear edge (22) of the can body (D) situated in its position at rest the particular entraining means (10) of the first feed arrangement (1) has a component of motion (vT) in the conveying direction (T) which is at most equal to 0.71 times the peripheral speed (v0) of the pulling means (2).

2. A system according to claim 1, characterized in that on impingement on the rear edge (22) of the can body situated it its position at rest the entraining means (10) of the first feed arrangement (1) have a component of motion (vT) in the conveying direction which is at most equal to 0.26 times the peripheral speed (v0).

3. A system according to one of claims 1 or 2, characterized in that the feed arrangements (1, 16) are constructed in the form of a chain arrangement.

4. A system according to one of claims 1 to 3, characterized in that the feed arrangements (1, 16) are constructed in the form of toothed belt arrangements.

5. A system according to one of the preceding claims, characterized in that the position of the first feed arrangement (1) can be adjusted in the conveying direction (T) in relation to the second feed arrangement (16).

**Revendications**

1. Installation de transport de corps de boîtes arrondis (D), depuis une station (11), dans laquelle les corps de boîtes prennent temporairement une position de repos suivant leur axe longitudinal, vers une station de traitement, cette installation de transport étant constituée de deux dispositifs d'avancement (1, 16) disposés l'un derrière l'autre et entraînés de façon synchrone, comportant chacun au moins un moyen de traction (2, 18), circulant sans fin et équipé d'organes d'entraînement (10, 19), et comportant un brin, tourné vers le corps de boîtes et circulant parallèlement à leur direction de transport (T) en passant autour de roues de renvoi (3, 4) situés l'un en amont, l'autre en aval, étant entendu que le premier dispositif d'avancement (1) peut être entraîné avec une vitesse constante de circulation (v0), et que les organes d'entraînement (10) du premier dispositif d'avancement (1) sont disposés perpendiculairement au plan de circulation (2') du moyen de traction (2),
caractérisée en ce que
le premier dispositif d'avancement (1) présente deux moyens de traction (2) identiques, disposés dans des plans parallèles, en ce que les organes d'entraînement (10) sont réalisés traversants entre les deux moyens de traction (2), et en ce que l'axe de rotation (21) de chacune des premières roues de renvoi (3) - en regardant dans la direction du transport (T) - est disposée de telle façon en amont de l'arête arrière (22) de chaque corps de boîtes (D) se trouvant en position de repos, que chaque organe d'entraînement (10) concerné du premier dispositif d'avancement (1), lors de sa rencontre avec l'arête arrière (22) du corps de boîtes (D) se trouvant en position de repos, possède une composante de mouvement (vT), dans la direction de transport (T), au plus égale à 0,71 fois la vitesse de circulation (v0) du moyen de traction (2).

2. Installation suivant la revendication 1, caractérisée en ce que les organes d'entraînement (10) du premier dispositif d'avancement (1), à leur rencontre avec l'arète arrière (22) du corps de boîtes (D) se trouvant en position de repos, possèdent une composante de mouvement (vT), dans la direction de transport (T), au plus égale à 0,26 fois la vitesse de circulation (v0).

3. Installation suivant la revendication 1 ou la revendication 2, caractérisée en ce que les dispositifs d'avancement (1, 16) sont réalisés sous la forme d'un dispositif à chaînes.

4. Installation suivant l'une quelconque des revendications 1 à 3, caractérisée en ce que les dispositifs d'avancement (1, 16) sont réalisés sous la forme d'un dispositif à courroies crantées.

5. Installation suivant l'une quelconque des revendications précédentes, caractérisée en ce que la position du premier dispositif d'avancement (1) par rapport au deuxième dispositif d'avancement (16) est réglable dans la direction de transport (T).

FIG.1

EP 0 296 386 B1

# FIG.2

8

# FIG.3

# FIG.4

FIG.5

EP 0 296 386 B1